Europäisches Patentamt

European Patent Office

Office européen des brevets

(19)

(11) **EP 1 507 334 A1**

(12) **DEMANDE DE BREVET EUROPEEN**

(43) Date de publication:
16.02.2005 Bulletin 2005/07

(51) Int Cl.⁷: **H04B 1/54**, H04B 1/40

(21) Numéro de dépôt: 04291714.6

(22) Date de dépôt: **07.07.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **12.08.2003 FR 0309871**

(71) Demandeur: STMicroelectronics S.A.
**92120 Montrouge (FR)**

(72) Inventeurs:
• **Busson, Pierre**
  **38000 Grenoble (FR)**
• **Paille, Bruno**
  **38960 Saint Aupre (FR)**

(74) Mandataire: **Dossmann, Gérard**
  **Bureau D.A. Casalonga-Josse**
  **Paul-Heyse-Strasse 33**
  **80336 München (DE)**

(54) **Composant électronique permettant notamment le décodage de signaux modulés par une modulation numérique en quadrature sur un grand nombre de porteuses orthogonales**

(57)   Une borne d'entrée/sortie ESO reçoit un signal analogique multi-canaux situés dans une bande de fréquences prédéterminées et émet un signal analogique mono-canal situé dans ladite bande de fréquences. Un module de syntonisation TZ possède une voie de réception du type à double conversion descendante jusqu'en bande de base, connectée entre la borne d'entrée/sortie et un étage de conversion analogique/numérique CANI, CANQ, et une voie d'émission du type à double conversion montante connectée entre un étage de conversion numérique/analogique CNA et la borne d'entrée/sortie ESO, les deux voies comportant un filtre commun FBAW du type à onde acoustique de volume ou du type à onde acoustique de surface disposé entre les deux étages de transposition de fréquences des deux voies. Un bloc numérique de réception BNR est connecté en sortie de l'étage de conversion analogique/numérique, et un bloc numérique d'émission BNE est connecté en entrée de l'étage de conversion numérique/analogique.

FIG.2

**Description**

L'invention concerne le décodage et le codage de canaux de transmission radiofréquences véhiculant des informations numériques codées.

L'invention s'applique ainsi avantageusement mais non limitativement à des signaux utilisant pour véhiculer les informations, une modulation numérique en quadrature sur un grand nombre de porteuses « orthogonales » (modulation OFDM : « Orthogonal Frequency Division Multiplexing », selon une dénomination couramment utilisée par l'homme du métier), et ce dans la bande de fréquences 5-6 GHz.

L'invention s'applique ainsi plus particulièrement aux réseaux locaux sans fil (réseaux « WLAN ») tels que ceux définis par la norme 802.11A.

L'invention concerne ainsi notamment les syntonisateurs (« tuner » en langue anglaise).

Les signaux analogiques reçus à l'entrée du syntonisateur sont composés de l'ensemble des canaux émis qui se situent dans la bande de fréquences 5 GHz-6 GHz par exemple, ces signaux étant modulés avec des modulations de type OFDM.

Le syntonisateur possède une voie de réception descendante qui a pour but de sélectionner le canal désiré et de sortir un signal sur la voie en phase (voie I) et sur la voie en quadrature (voie Q). Ce signal est ensuite converti en un signal numérique et démodulé pour fournir un flux de données conforme aux normes MPEG par exemple, qui sera décodé pour délivrer les informations initialement transmises.

Le tuner possède également une voie montante qui permet de remoduler un signal de type OFDM et d'émettre en sortie du tuner un signal mono-canal situé dans la bande de fréquences considérée, par exemple 5-6 GHz.

Actuellement, deux types d'architecture de tuner sont utilisées pour la réception dans la bande 5-6 GHz. Une première architecture est de type super-hétérodyne, mais elle ne permet pas une intégration complète de la partie tuner.

Un deuxième type d'architecture est de type ZIF, c'est-à-dire à fréquence intermédiaire nulle, permettant une intégration plus aisée de la partie tuner, mais présentant une mauvaise élimination des canaux adjacents au canal désiré.

L'invention vise à proposer un composant permettant le décodage de signaux sur la voie descendante en gardant une importante élimination (« rejection ») des canaux adjacents (importante « rejection » de l'inter-modulation d'ordre 3).

L'invention a également pour but de proposer un tel composant dont le tuner soit totalement intégré sur une seule puce.

L'invention a encore pour but de proposer un composant dont non seulement le tuner, mais également les étages numériques de traitement, soient totalement intégrés sur une même puce.

L'invention propose donc un composant électronique comprenant :

- une borne d'entrée/sortie pour recevoir un signal analogique multi-canaux situés dans une bande de fréquences prédéterminée, par exemple la bande 5 GHz-6 GHz, et émettre un signal analogique mono-canal situé dans ladite bande de fréquences ;
- un module de syntonisation possédant une voie de réception du type à double conversion descendante jusqu'en bande de base, connectée entre la borne d'entrée/sortie et un étage de conversion analogique/numérique, et une voie d'émission du type à double conversion montante connectée entre un étage de conversion numérique/analogique et la borne d'entrée/sortie ;
- un bloc numérique de réception connecté en sortie de l'étage de conversion analogique/numérique ; et
- un bloc numérique d'émission connecté en entrée de l'étage de conversion numérique/analogique.

Par ailleurs, les deux voies du module de syntonisation (tuner) comportent un filtre commun du type à onde acoustique de volume (filtre « BAW » : Bulk Acoustic Wave), ou bien du type à onde acoustique de surface (filtre « SAW » : Surface acoustique Wave). Ce filtre commun est disposé entre les deux étages de transposition de fréquence des deux voies.

Le composant électronique selon l'invention présente donc au niveau du tuner une architecture du type D-ZIF, c'est-à-dire à double conversion descendante jusqu'en bande de base.

La première descente à travers une fréquence intermédiaire permet une première conversion de la fréquence en une fréquence intermédiaire, par exemple 1,22 GHz, limitant le décalage en courant continu (DC-offset) et permettant surtout un filtrage par un filtre passe-bande du type SAW ou par un filtre du type BAW, particulièrement raide, ce qui offre l'avantage d'éliminer les canaux adjacents.

Cette première conversion permet aussi d'utiliser une fréquence intermédiaire fixe et donc de pouvoir descendre le signal en bande de base par l'intermédiaire d'une fréquence fixe d'oscillateur garantissant une meilleure quadrature entre les voies I et Q.

Par ailleurs, la deuxième descente (en bande de base) permet une intégration des filtres passe-bande et évite l'existence d'une fréquence image.

Selon un mode de réalisation de l'invention, la fréquence du signal de transposition appliquée à l'étage de transposition de fréquence de chacune des voies, disposé entre le filtre commun et la borne d'entrée/sortie, est égale à la fréquence du canal désirée diminuée de la fréquence centrale du filtre commun.

Par ailleurs, la fréquence du signal de transposition appliquée à l'autre étage de transposition de fréquence de la voie de réception est égale à la fréquence centrale du filtre commun.

Et, la fréquence du signal de transposition appliquée à l'autre (premier) étage de transposition de la voie d'émission, la fréquence centrale du signal numérique présent en entrée de l'étage de conversion numérique analogique (fréquence intermédiaire du signal numérique avant passage dans le convertisseur analogique/numérique) ainsi que la fréquence d'échantillonnage de cet étage de conversion numérique/analogique, sont choisies de façon à obtenir, après transposition de fréquence et en amont du filtre commun, un signal transposé possédant une harmonique de fréquence égale à la fréquence centrale du filtre commun.

Selon un mode de réalisation de l'invention, la fréquence du signal de transposition appliquée à l'autre étage de transposition de la voie d'émission, c'est-à-dire disposé entre le convertisseur numérique/analogique et le filtre commun, et la fréquence d'échantillonnage de l'étage de conversion numérique, sont des sous-multiples de la fréquence centrale du filtre commun.

Lorsque le filtre commun est un filtre du type à onde acoustique de volume, le composant comporte en outre avantageusement des moyens de détermination de la fréquence centrale de ce filtre à onde acoustique de volume.

En effet, il est connu que la fréquence centrale d'un filtre à onde acoustique de volume, qui est par exemple constituée en pratique d'au moins deux résonateurs du type à onde acoustique de volume, est difficilement maîtrisable avec précision à partir des caractéristiques physiques des résonateurs. Ce problème, qui rend à priori incompatible l'utilisation d'un filtre intégré du type BAW dans un tuner, est résolu selon l'invention par une détermination explicite in situ de la fréquence centrale du filtre.

Deux possibilités sont alors offertes pour déterminer cette fréquence centrale.

Selon une première variante de l'invention, les moyens de détermination comportent des moyens aptes, en absence du signal d'entrée à l'entrée du premier étage de transposition de la voie de réception, à faire varier en deçà de la limite inférieure de la plage de fréquences des canaux, la fréquence d'un signal de transposition de calibration appliquée à cet étage de transposition.

Il est par ailleurs prévu des moyens de détection aptes à déterminer pour chaque valeur de la fréquence du signal de calibration, la puissance du signal en sortie du filtre à onde acoustique de volume et à détecter la puissance maximale, la fréquence centrale du filtre commun étant alors la fréquence du signal de calibration correspondant à cette valeur maximale de puissance.

Selon une autre variante de l'invention, qui utilise la présence de l'étage de conversion numérique/analogique, les moyens de détermination comportent des moyens aptes à délivrer un signal de calibration sinusoïdal de fréquence réglable à l'entrée de l'étage de conversion analogique/numérique, et à faire varier la fréquence de ce signal de calibration.

Il est par ailleurs prévu des moyens de détection aptes à déterminer pour chaque valeur de la fréquence du signal de calibration, la puissance du signal en sortie du filtre à onde acoustique de volume et à détecter la puissance maximale, la fréquence centrale du filtre commun étant alors la fréquence du signal de calibration correspondant à cette valeur maximale de puissance.

Lorsque ce filtre commun est du type à onde acoustique de volume, le module de syntonisation peut être réalisé avantageusement sous la forme d'un circuit intégré sur un substrat monolithique. En d'autres termes, dans ce cas, le tuner peut être réalisé de façon totalement intégrée sur une même puce.

Mieux, il est également possible de réaliser le composant sous la forme d'un circuit intégré sur un substrat monolithique. En d'autres termes, non seulement le tuner, mais également l'étage numérique de réception et l'étage numérique d'émission, font partie intégrante de la même puce.

Lorsque le filtre commun est du type à onde acoustique de surface (filtre SAW), le module de syntonisation peut être réalisé sous la forme d'un circuit intégré sur un substrat monolithique, à l'exception du filtre commun. En d'autres termes, dans ce cas, le filtre SAW est disposé à l'extérieur de la puce incorporant le tuner.

De même, lorsque l'ensemble du composant est réalisé sous la forme d'un circuit intégré sur un substrat monolithique (une seule puce), le filtre commun du type SAW se situe également à l'extérieur de ladite puce.

Le signal de réception et le signal d'émission sont par exemple des signaux modulés selon une modulation multiporteuses du type OFDM.

L'invention a également pour objet un dispositif d'émission/réception d'un réseau local sans fil, par exemple conforme à la norme 802.11A, incorporant un composant tel que défini ci-avant.

D'autres avantages et caractéristiques de l'invention apparaîtront à l'examen de la description détaillée de modes de réalisation, nullement limitatifs, et des dessins annexés, sur lesquels :

- la figure 1 illustre schématiquement un premier mode de réalisation d'un composant selon l'invention ;
- la figure 2 illustre plus en détail la partie « tuner » du composant de la figure 1 ;
- les figures 3 et 4 illustrent plus en détail mais toujours schématiquement un mode de réalisation d'un bloc numérique de réception d'un composant selon l'invention ;
- la figure 5 illustre plus en détail mais toujours schématiquement un mode de réalisation d'un bloc numérique d'émission d'un composant selon l'invention ;
- la figure 6 illustre schématiquement un diagramme fréquentiel des canaux après une première transposition ;

- la figure 7 illustre schématiquement un premier mode de réalisation relatif à une phase de calibration selon l'invention de la fréquence centrale d'un filtre du type à onde acoustique de volume ;

- la figure 8 illustre schématiquement un deuxième mode de réalisation relatif également à une phase de calibration de la fréquence centrale d'un filtre à onde acoustique de volume ;

- la figure 9 illustre schématiquement une réalisation technologique d'un composant selon l'invention ; et

- la figure 10 illustre schématiquement un autre mode de réalisation de la partie « tuner » d'un composant selon l'invention comportant un filtre du type à onde acoustique de surface.

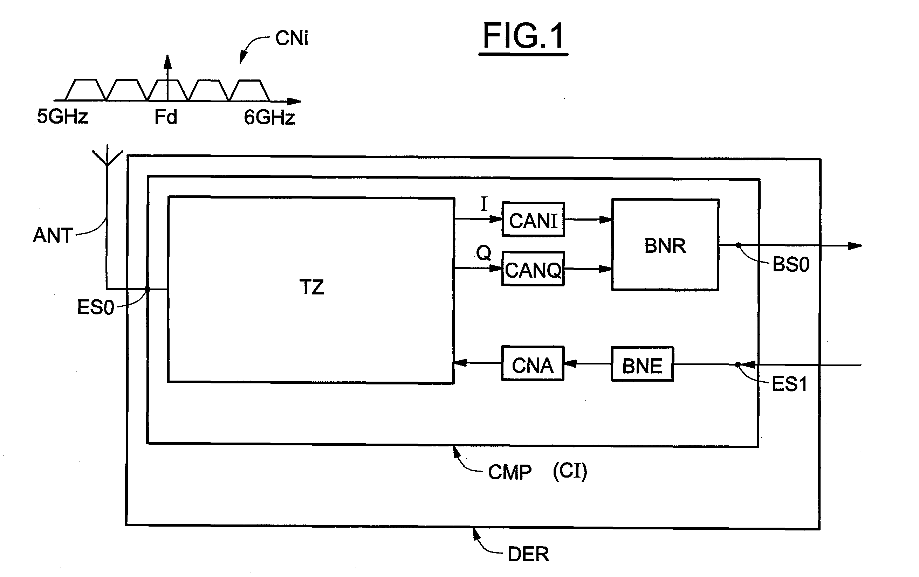

Sur la figure 1, la référence DER désigne un dispositif d'émission/réception connecté à une antenne ANT capable de capter des signaux analogiques modulés selon une modulation du type OFDM, et formés de plusieurs canaux CNi s'étendant dans la bande de fréquence 5 GHz-6 GHz.

Le dispositif est également capable d'émettre via cette antenne ANT, non simultanément à la réception, un signal mono-canal de type OFDM, également situé dans ladite bande de fréquence.

Ce dispositif DER fait par exemple partie d'un réseau local de transmission sans fil conforme à la norme 802.11A (réseau WLAN).

Le dispositif DER comporte en tête un composant électronique CMP capable, en réception, de recevoir l'ensemble des canaux CNi présents dans le signal reçu à l'entrée de signal ESO et à délivrer à la sortie BSO un flux de données MPEG correspondant à un canal sélectionné.

En émission, les informations numériques correspondant à un canal souhaité pour l'émission, sont délivrées en entrée ES1 puis, après modulation et transposition de fréquence, émises sous la forme d'un signal analogique mono-canal à la borné ESO pour transmission via l'antenne ANT.

Dans l'exemple illustré ici, le composant CMP est réalisé sous la forme d'un circuit intégré CI (puce) entièrement réalisé en technologie CMOS sur un substrat monolithique de silicium.

Comme on le verra plus en détail ci-après, le tuner TZ comporte une voie de réception du type à double conversion descendante jusqu'en bande de base connectée à la borne d'entrée/sortie BSO et délivrant deux signaux analogiques en quadrature I et Q.

Le tuner TZ comporte par ailleurs une voie montante d'émission du type à double conversion montante connectée entre la sortie d'un convertisseur numérique/analogique CNA et la borne d'entrée/sortie ESO.

Un étage de conversion analogique/numérique CANI, CANQ relie la sortie de la voie de réception du tuner TZ à un bloc numérique de réception BNR, tandis qu'un bloc numérique d'émission BNE est connecté entre l'entrée ES1 et l'entrée du convertisseur numérique analogique CNA.

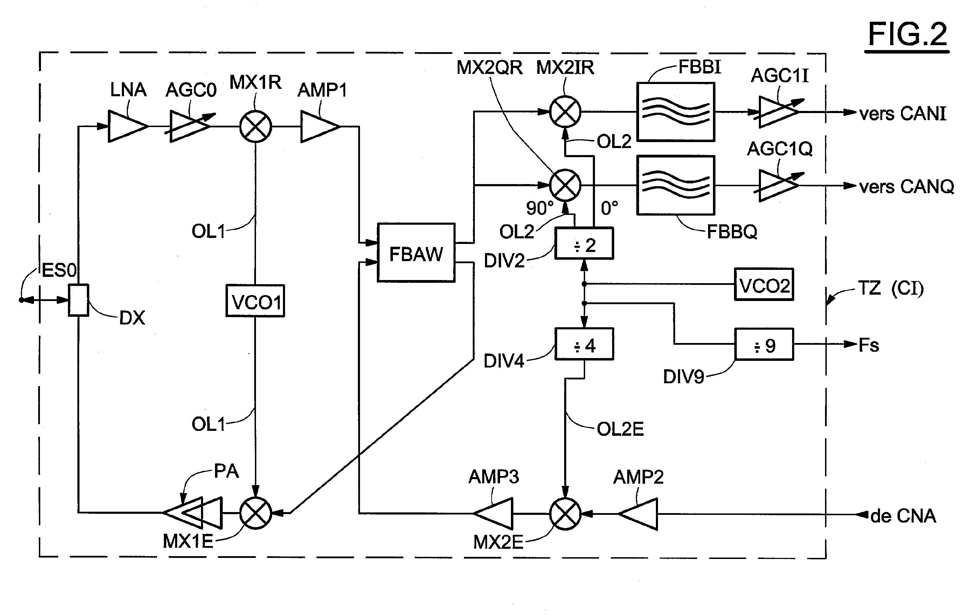

On se réfère maintenant plus particulièrement à la figure 2 pour décrire un mode de réalisation du tuner TZ du composant CMP.

Celui-ci comporte en tête un duplexeur DX relié à la borne d'entrée/sortie ESO et sur lesquels sont connectées les voies de réception et d'émission.

La voie de réception, descendante, comporte ici un amplificateur faible bruit LNA suivi d'un amplificateur à gain commandé AGC0. Cet amplificateur AGC0 est suivi d'un premier étage de transposition de fréquence ou mélangeur MX1R recevant un premier signal de transposition de fréquence OL1 émis par exemple par un oscillateur commandé en tension VCO1.

La sortie du mélangeur MX1R est reliée à l'entrée d'un amplificateur AMP1 dont la sortie est reliée à l'entrée d'un filtre passe-bande FBAW du type à onde acoustique de volume.

Les filtres du type à onde acoustique de volume sont connus en eux-mêmes de l'homme du métier. Ils sont par exemple formés d'au moins deux résonateurs du type à onde acoustique de volume, également parfois abusivement désignés sous le vocable de résonateur piezzo-électrique. De tels résonateurs sont par exemple décrits dans l'article de Sang-Hee Kim et autres intitulé « AIN-based film bulk acoustic resonator devices with W/SiO2 multilayers reflector for rf band pass filter application », J. Vac. Sci. Technol. B 19(4), Juillet/Août 2001, ou encore dans l'article de K. M. Lakin intitulé « Thin film resonators and filters », 1999 IEEE ULTRASONICS SYMPOSIUM, p. 895-906.

Par ailleurs ce dernier article illustre la réalisation de filtres du type BAW, formés de plusieurs résonateurs disposés en échelle.

La voie de réception se poursuit, en aval du filtre FBAW par un deuxième étage de transposition de fréquence formé ici de deux mélangeurs MX2R et MX2IR. Ces deux mélangeurs appartiennent respectivement à la voie I et à la voie Q, qui sont en quadrature de phase.

Le mélangeur MX2IR de la voie I (voie phase) reçoit un signal de transmission de fréquence OL2 issu, après division par deux dans un diviseur DIV2, d'un autre oscillateur commandé en tension VCO2.

Par ailleurs, le mélangeur MX2QR, qui appartient à la voie Q, reçoit le même signal OL2, mais est déphasé de 90° par rapport à celui délivré au mélangeur MX2IR.

Les deux mélangeurs MX2IR et MX2QR sont respectivement suivis de deux filtres passe-bande FBBI et FBBQ, eux-mêmes suivis de deux autres amplificateurs à gain commandé AGC1I et AGC1Q.

La voie d'émission comporte, quant à elle, en tête, un amplificateur AMP2 suivi d'un premier étage de transposition de fréquence MX2E recevant un signal de transposition de fréquence OL2E issu, après division par quatre dans un diviseur de fréquence DIV4, de l'oscillateur VCO2.

La sortie du mélangeur MX2E est reliée à un autre amplificateur AMP3 dont la sortie est reliée à l'entrée du filtre FBAW. La sortie du filtre FBAW est reliée à un deuxième étage de transposition de fréquence MX1E recevant également le signal OL1 en tant que signal de transposition de fréquence.

La sortie du mélangeur MX1E est reliée au duplexeur DX par un amplificateur de puissance PA. Bien que celui-ci ait été représenté comme faisant partie du circuit intégré CI, il peut en pratique être situé au moins en partie à l'extérieur du circuit intégré CI.

On notera donc que le filtre à onde acoustique de volume FBAW est commun à la voie d'émission et à la voie de réception.

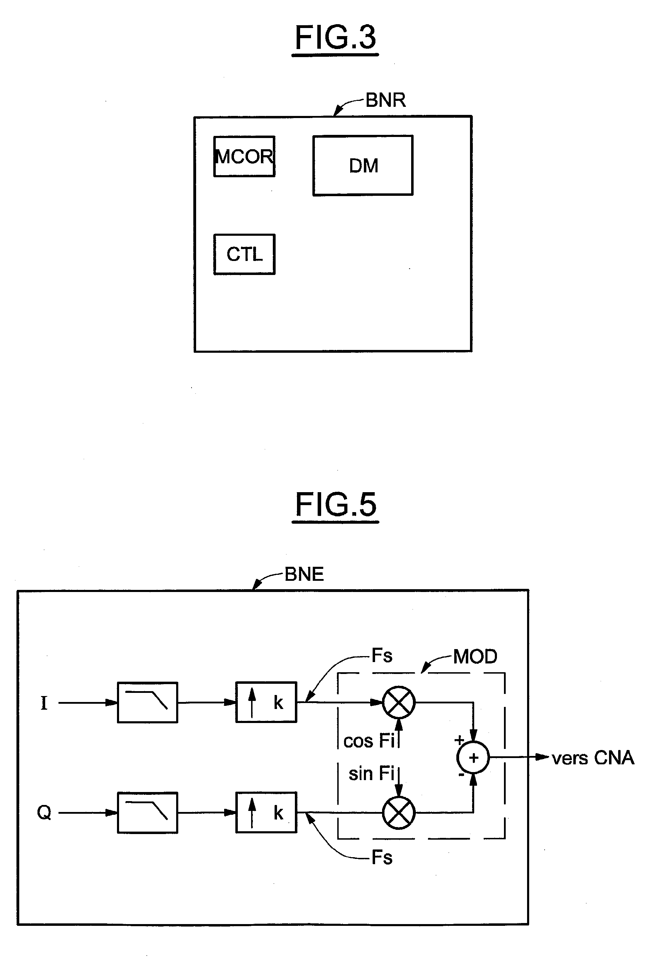

On va maintenant décrire plus en détail la structure interne du bloc numérique BNM en se référant plus particulièrement aux figures 3 et 4.

Outre des moyens de contrôle CTL, qui peuvent être par exemple réalisés de façon logicielle au sein d'un micro-contrôleur, et destinés à commander les amplificateurs à gains commandés, le bloc BNM comporte en tête des moyens de correction MCOR destinés à corriger des défauts d'appariement en phase et en amplitude des deux voies de traitement I et Q.

De tels moyens de correction sont connus en eux-mêmes de l'homme du métier. Celui-ci pourra éventuellement se référer, à toutes fins utiles, au brevet américain n° 6 044 112, ou encore à la demande de brevet français n° 0203256 au nom du demandeur.

Le bloc numérique BNM comporte ensuite un module de décodage de canal DM, dont un exemple de structure est illustré plus particulièrement sur la figure 4.

Plus précisément, ce module numérique de décodage de canal DM comporte un étage DMD comportant des moyens de démodulation capable d'effectuer les traitements classiques de démodulation, suivi d'un étage de correction d'erreur CRE effectuant les traitements classiques de décodage de Viterbi, un désentrelacement, un décodage de Reed-Solomon, un débrassage, de façon à délivrer le paquet FM qui sera décodé dans un bloc de décodage de source externe au composant CMP, et conforme à la norme MPEG par exemple.

Le module de décodage de canal comporte aussi classiquement un étage de synchronisation et un étage d'égalisation.

L'étage DMD comporte également schématiquement en tête des moyens de correction DRT (« Derotator » en langue anglaise) aptes à corriger le bruit de phase, la dérive en fréquence et le décalage en fréquence des synthétiseurs de fréquence. Les moyens de correction DRT sont également utilisés ici selon l'invention pour compenser le filtrage passe-bande FBBI, FBBQ et évitent ainsi d'obtenir une marge d'erreur trop faible pour l'interprétation de la constellation. De tels moyens de dérotation peuvent être par exemple ceux décrits dans la demande de brevet européen n° 0 481 543.

Le filtrage analogique est ici complété par un filtrage de Nyquist effectué dans un filtre numérique FN.

L'étage de correction d'erreur CRE effectue ensuite les traitements classiques de correction d'erreur bien connus de l'homme du métier, sous la dénomination anglosaxonne de FEC (Forward Error Correction).

On se réfère maintenant à la figure 5 pour décrire un exemple de réalisation du bloc numérique d'émission BNE.

Celui-ci comporte deux filtres passe-bas recevant respectivement les entrées I et Q et suivis par des moyens de sur-échantillonnage délivrant sur chacune des voies I et Q numériques un signal sur-échantillonné à la fréquence Fs.

Dans l'exemple décrit ici, la fréquence Fs est délivrée à partir du signal issu de l'oscillateur VCO2 après division de fréquence par 9 dans un diviseur de fréquence DIV9 (figure 2).

Les deux voies I et Q sur-échantillonnées à la fréquence Fs attaquent un modulateur MOD comportant classiquement deux multiplieurs recevant respectivement cosFi et sinFi, où Fi désigne une fréquence intermédiaire égale par exemple à 67,78 MHz. La sortie des deux multiplieurs attaque un soustracteur additionneur dont la sortie est connectée à l'entrée de l'étage de conversion numérique analogique.

Ensuite, le signal à émettre, composé d'un seul canal centré en Fi est transformé en analogique par l'intermédiaire du convertisseur numérique/analogique, par exemple un convertisseur 12 bits, qui est échantillonné à la fréquence Fs.

En sortie du convertisseur numérique/analogique, on obtient donc un signal mono-canal à la fréquence Fi (67,78 MHz) ainsi qu'un ensemble d'harmoniques à des fréquences égales à $N.Fs \pm Fi$.

La fréquence du signal de transposition appliquée à l'étage de transposition de fréquence MX1R, MX1E de chacune des voies d'émission et de réception, est égale à la fréquence du canal désiré diminuée de la fréquence centrale du filtre commun FBAW.

A titre indicatif, si la fréquence centrale du filtre FBAW est égale à 1220 MHz, et si le canal désiré est celui centré sur la fréquence Fd=5,5 GHz, la fréquence du signal OL1 sera égale à 4,28 GHz.

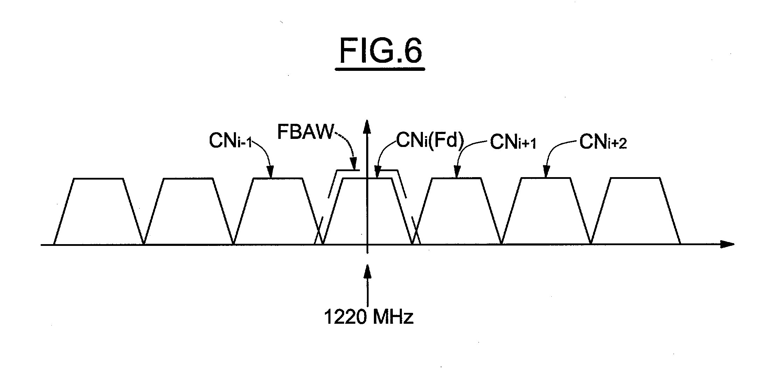

En conséquence, le signal à la sortie du mélangeur MX1R est, comme illustré sur la figure 6, un signal comportant tous les canaux, avec le canal désiré $CN_i$ centré autour de la fréquence centrale du filtre FBAW, c'est-à-dire 1220 MHz.

Le filtre FBAW est relativement raide et présente par exemple une bande passante de l'ordre de 20 MHz qui correspond sensiblement à la largeur d'un canal. En conséquence, à la sortie du filtre FBAW, le signal ne comportera quasiment que le canal désiré centré autour de 1220 MHz.

Puis, ce signal filtré subit une deuxième conversion descendante au sein des deux mélangeurs MX2I et MX2Q, recevant respectivement les deux signaux de transposition de fréquence OL2 mutuellement déphasés de 90°.

Dans l'exemple décrit ici, la fréquence du signal délivré par l'oscillateur VCO2 est égale à 2440 MHz, ce qui correspond à une fréquence de 1220 MHz pour les signaux OL2.

En conséquence, puisque la fréquence des signaux de transposition OL2 est égale à la fréquence centrale du filtre commun FBAW, cette deuxième transposition de fréquence est donc ici du type à fréquence intermédiaire nulle et va ramener le signal directement en bande de base.

En d'autres termes, on obtient en sortie des mélangeurs MX2I et MX2Q, sur les deux voies de traitement I et Q, deux signaux analogiques en quadrature en bande de base, c'est-à-dire présentant le canal désiré centré autour de la fréquence nulle.

Les deux filtres passe-bas FBBI et FBBQ sont destinés à éliminer ici notamment les résidus du mélange.

Les signaux analogiques en sortie des filtres FBBI et FBBQ, après amplification dans les amplificateurs AGC1I et AGC1Q, sont numérisés dans les convertisseurs analogiques/numériques CANI et CANQ qui présentent par exemple ici une fréquence d'échantillonnage de l'ordre de 138 MHz (équivalant à Fs/2) avec une résolution de l'ordre de 4 bits.

En ce qui concerne la voie d'émission montante, le convertisseur numérique/analogique CNA est échantillonné à la fréquence de 276,11 MHz, fournissant un signal analogique à une fréquence fondamentale Fi de 67,78 MHz.

Par ailleurs, comme indiqué ci-avant, ce signal présente un certain nombre d'harmoniques. Et, l'harmonique 2 présente une fréquence égale à 610 MHz.

Le niveau de cette harmonique est environ à 25 dB en dessous du niveau de la fréquence fondamentale. C'est la raison pour laquelle ce signal est amplifié dans l'amplificateur AMP2 avant mélange dans le mélangeur MX2E avec le signal de transposition de fréquence OL2E dont la fréquence est égale à 610 MHz (2440/4).

Après cette première transposition de fréquence montante, et amplification par l'amplificateur AMP3, le signal résultant du mélange est filtré par le filtre FBAW à 1220 MHz et le signal en sortie du filtre FBAW ne comporte alors que le canal désiré pour l'émission, centré autour de 1220 MHz.

Puis, après une deuxième conversion de fréquence montante dans l'étage de transmission de fréquence MX1E, le signal mono-canal se retrouve dans la bande de fréquence 5-6 GHz et est transmis après amplification de puissance PA à la borne de sortie ESO.

La fréquence centrale du filtre intégré FBAW n'est pas définie avec précision à partir des seules caractéristiques technologiques et de dimensionnement des résonateurs. Seule la largeur de bande du filtre est bien définie.

Aussi l'invention prévoit-elle des moyens de détermination aptes à déterminer cette fréquence centrale lors d'une phase de calibration.

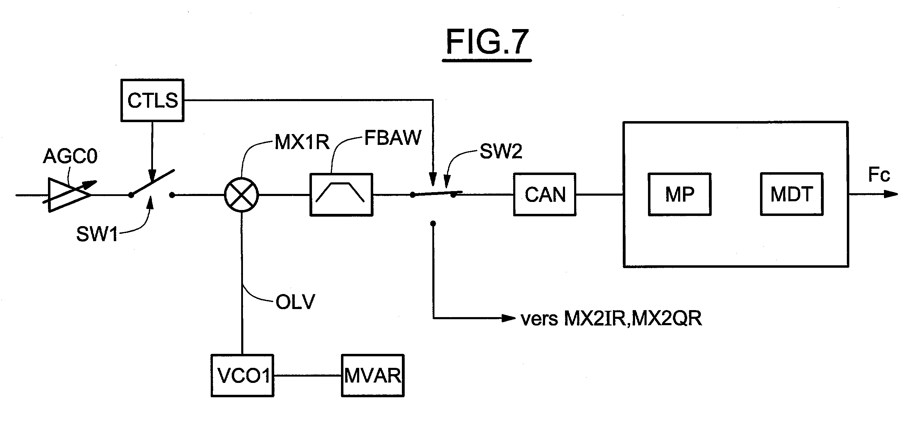

Plus précisément, selon un exemple de réalisation illustré sur la figure 7, les moyens de détermination de cette fréquence centrale comportent des moyens de contrôle CTLS aptes à commander un premier interrupteur SW1 disposé entre la sortie de l'amplificateur AGCO et l'entrée du mélangeur MX1R, et un deuxième interrupteur SW2 connecté en aval du filtre FBAW.

Dans la phase de calibration, le premier interrupteur SW1 est ouvert (figure 7) alors que dans la phase de fonctionnement normal il est fermé.

En d'autre termes, dans la phase de calibration, il y a une absence de signal à l'entrée du premier étage de transposition MX1R, alors que le signal reçu par l'antenne est présent à l'entrée du premier étage de transposition MX1R dans la phase de fonctionnement normal.

Des moyens de commande MVAR sont aptes à commander l'oscillateur VCO1, de façon à faire varier autour de la fréquence centrale présumée du filtre FBAW, la fréquence d'un signal de transposition de calibration OLV appliqué à cet étage de transposition MX1R.

Le signal en sortie du filtre FBAW est dirigé par l'intermédiaire du commutateur SW2 vers un convertisseur analogique numérique.

Des moyens de post-traitement comportent alors des moyens MP aptes à détecter pour chaque valeur de la fréquence du signal de calibration, la puissance du signal en sortie du filtre à onde acoustique de volume, et des moyens MDT aptes à détecter la puissance maximale.

La fréquence centrale Fc du filtre FBAW est alors la fréquence du signal de calibration correspondant à cette valeur maximale de puissance.

A titre d'exemple, les moyens MP peuvent calculer la puissance du signal en en calculant par exemple le module. Une façon simplifiée de calculer le module du signal est fournie par la formule ci-dessous :

$$\text{Module } (S) = \text{Max } (\text{abs } (S)) + 1/2 \text{ Min } (\text{abs } (S))$$

Dans cette formule, Max désigne la valeur maximale, Min désigne la valeur minimale et abs désigne la valeur absolue, S le signal délivré par le convertisseur analogique numérique CAN.

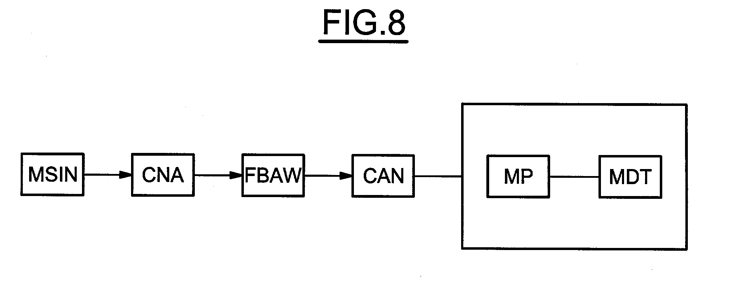

Cela étant, il existe également une autre possibilité pour la réalisation des moyens de détermination de la fréquence centrale du filtre FBAW. Cette possibilité est illustrée sur la figure 8 et utilise la présence du convertisseur numérique analogique CNA.

Plus précisément, les moyens de détermination de la fréquence centrale du filtre FBAW comporte alors des moyens MSIN aptes à délivrer un signal de calibration sinusoïdal de fréquence réglable à l'entrée de l'étage de conversion numérique/analogique CNA et à faire varier la fréquence de ce signal de calibration.

Le signal en sortie du filtre FBAW est alors dirigé vers un convertisseur analogique/numérique et des moyens de post-traitement, analogues à ceux qui ont été décrits ci-avant pour la première variante de réalisation des moyens de détermination de la fréquence centrale, permettent de détecter la puissance maximale du signal en sortie du filtre FBAW.

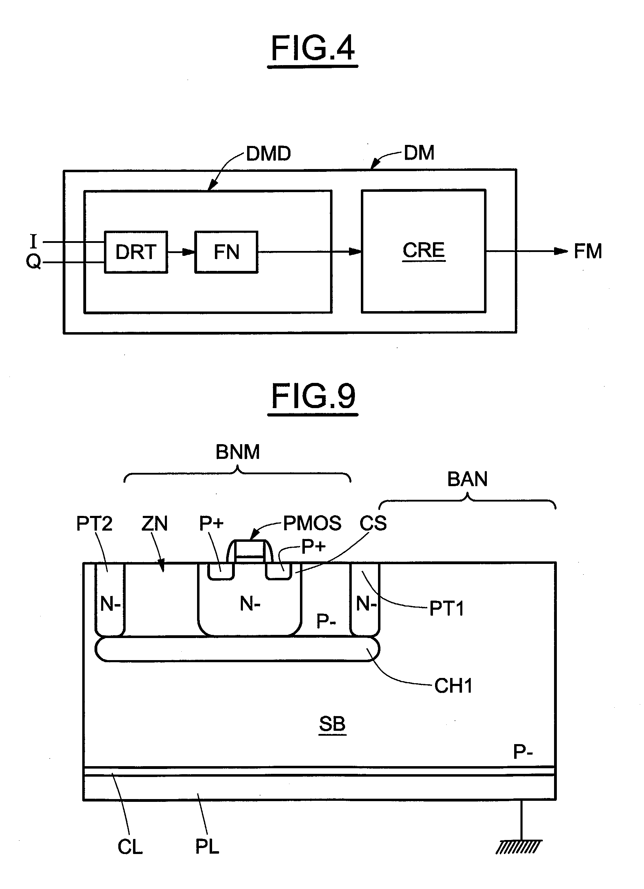

Technologiquement, le circuit intégré CI selon l'invention est réalisé, par exemple en technologie CMOS 0,13 μm, sur un substrat monolythique SB en silicium, par exemple de type P- (figure 9).

Pour absorber les pics de courant à haute fréquence, il est préférable de coller au moyen d'une colle conductrice CL classique, une plaque métallique PL sur la face arrière du substrat SB. Cette plaque métallique est destinée à être reliée à la masse. La fine couche d'oxyde qui se forme naturellement sur le silicium du substrat forme le diélectrique d'un condensateur dont les deux électrodes sont respectivement formées par le substrat SB et la plaque métallique PL. Ce condensateur, dont la valeur capacitive est relativement importante, permet ainsi d'absorber les pics de courant à haute fréquence.

Par ailleurs, la partie numérique BNM du composant CMP est réalisée dans une zone ZN du substrat qui est isolée du reste du substrat (dans laquelle est réalisée la partie analogique BAN du composant) par une barrière semiconductrice dopée N-, formée ici d'une couche enterrée CH1 et de deux puits PT1 et PT2.

Par ailleurs, les transistors PMOS de la partie numérique sont réalisés au sein d'un caisson N- qui vient au contact de la couche enterrée CH1.

Et, afin d'éviter que le bruit sur la tension d'alimentation Vdd ne soit transmis via les caissons N- vers la partie analogique, pour venir directement perturber notamment l'amplificateur LNA et le filtre FBAW, il est avantageux de polariser tous les caissons N- avec une tension de polarisation différente de celle alimentant les transistors situés dans cette zone isolée ZN du substrat.

L'invention n'est pas limitée au mode de réalisation qui vient d'être décrit, mais en embrasse toutes les variantes.

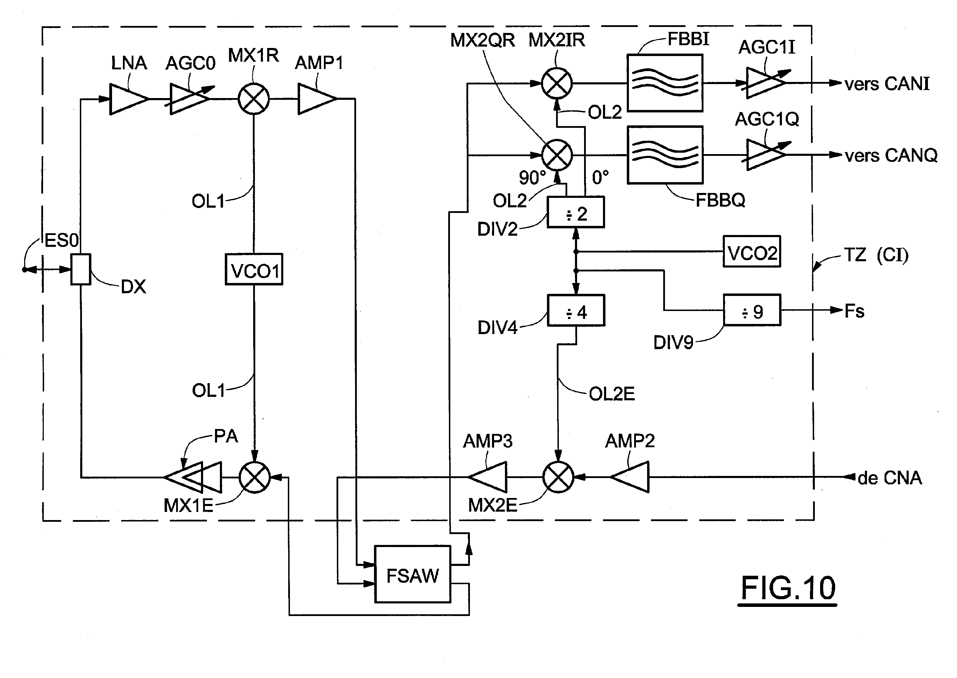

Ainsi, le filtre commun peut être également du type à onde acoustique de surface, comme illustré sur la figure 10.

Le mode de réalisation illustré sur la figure 10 diffère simplement de celui illustré sur la figure 2, par le fait que le filtre à onde acoustique de surface FSAW est cette fois-ci disposé à l'extérieur du circuit intégré incorporant le tuner TZ.

Les filtres du type à ondes acoustiques de surface sont connus en eux-mêmes de l'homme du métier. On pourra, par exemple, utiliser ici un filtre présentant une fréquence centrale de 1220 MHz, tel que celui commercialisé par la Société allemande EPCOS AG, sous la référence B 1610.

Ce filtre FSAW est également par nature relativement raide et il présente une bande passante de 20 MHz.

Par ailleurs, un filtre du type à onde acoustique de surface ne nécessite pas de calibration afin de déterminer exactement sa fréquence centrale.

## Revendications

1. Composant électronique, **caractérisé par le fait qu'**il comprend :

   - une borne d'entrée/sortie (ESO) pour recevoir un signal analogique multi-canaux situés dans une bande de fréquences prédéterminées et émettre un signal analogique mono-canal situé dans ladite bande de fréquences,
   - un module de syntonisation (TZ) possédant une voie de réception du type à double conversion descendante jusqu'en bande de base, connectée entre la borne d'entrée/sortie et un étage de conversion analogique/numérique (CANI, CANQ), et une voie d'émission du type à double conversion montante connectée entre un étage de conversion numérique/analogique (CNA) et la borne d'entrée/sortie (ESO), les deux voies comportant un filtre commun (FBAW, FSAW) du type à onde acoustique de volume ou du type à onde acoustique de surface disposé entre les deux étages de transposition de fréquences des deux voies,
   - un bloc numérique de réception (BNR) connecté en sortie de l'étage de conversion analogique/numérique,
   - un bloc numérique d'émission (BNE) connecté en entrée de l'étage de conversion numérique/ analogique.

2. Composant selon la revendication 1, **caractérisé par le fait que** la fréquence du signal de transposition appliqué à l'étage de transposition de fréquence (MX1R, MX1E) de chacune des voies, disposé entre le filtre commun et la borne d'entrée/sortie est égale à la fréquence du canal désiré (Fd) diminuée de la fréquence centrale du filtre commun (FBAW, FSAW), **par le fait que** la fréquence du signal de transposition appliqué à l'autre étage de transposition de fréquence de la voie de réception (MX2IR, MX2QR) est égale à la fréquence centrale du filtre commun, et **par le fait que** la fréquence du signal de transposition (OL2E) appliqué à l'autre étage de transposition (MX2E) de la voie d'émission, la fréquence centrale (Fi) du signal numérique présent en entrée de l'étage de conversion numérique/analogique, et la fréquence d'échantillonnage (Fs) de l'étage de conversion numérique/analogique sont choisies de façon à obtenir après transposition de fréquence et en amont du filtre commun un signal transposé possédant une harmonique de fréquence égale à la fréquence centrale du filtre commun.

3. Composant selon la revendication 2, **caractérisé par le fait que** la fréquence du signal de transposition (OL2E) appliqué à l'autre étage de transposition (MX2E) de la voie d'émission et la fréquence d'échantillonnage (Fs) de l'étage de conversion numérique/analogique sont des sous-multiples de la fréquence centrale du filtre commun.

4. Composant selon l'une des revendications précédentes, **caractérisé par le fait que** le filtre commun est un filtre du type à onde acoustique de volume (FBAW), et **par le fait qu'**il comporte en outre des moyens de détermination de la fréquence centrale du filtre à onde acoustique de volume.

5. Composant selon la revendication 4, **caractérisé par le fait que** les moyens de détermination comportent des moyens (MVAR) aptes en l'absence de signal à l'entrée du premier étage de transposition (MX1R) de la voie de réception, à faire varier en deçà de la limite inférieure de la plage de fréquences des canaux, la fréquence d'un signal de transposition de calibration (OLV) appliqué à cet étage de transposition, et des moyens de détection(MP, MDT) aptes à déterminer pour chaque valeur de la fréquence du signal de calibration (OLV), la puissance du signal en sortie du filtre à onde acoustique de volume et à détecter la puissance maximale, la fréquence centrale (Fc) du filtre commun (FBAW) étant alors la fréquence du signal de calibration correspondant à cette valeur maximale de puissance.

6. Composant selon la revendication 4, **caractérisé par le fait que** les moyens de détermination comportent des moyens (MSIN) aptes à délivrer un signal de calibration sinusoïdal de fréquence réglable à l'entrée de l'étage de conversion numérique analogique, et à faire varier la fréquence de ce signal de calibration, et des moyens de détection(MP, MDT) aptes à déterminer pour chaque valeur de la fréquence du signal de calibration (OLV), la puissance du signal en sortie du filtre à onde acoustique de volume et à détecter la puissance maximale, la fréquence centrale (Fc) du filtre commun (FBAW) étant alors la fréquence du signal de calibration correspondant à cette valeur maximale de puissance.

7. Composant selon l'une des revendications précédentes, **caractérisé par le fait que** le filtre commun est du type à onde acoustique de volume (FBAW), et **par le fait que** le module de syntonisation est réalisé sous la forme d'un circuit intégré sur un substrat monolithique (SB).

8. Composant selon la revendication 7, **caractérisé par le fait qu'**il est réalisé sous la forme d'un circuit intégré sur un substrat monolithique (SB).

9. Composant selon l'une des revendications 1 à 6, **caractérisé par le fait que** le filtre commun est du type à onde acoustique de surface (FSAW), et **par le fait qu'**à l'exception du filtre commun, le module de syntonisation est réalisé sous la forme d'un circuit intégré sur un substrat monolithique (SB).

10. Composant selon la revendication 9, **caractérisé par le fait qu'**à l'exception du filtre commun, il est réalisé sous la forme d'un circuit intégré sur un substrat monolithique (SB).

11. Composant selon l'une des revendications précédentes, **caractérisé par le fait que** le signal de réception et le signal d'émission sont des signaux modulés selon une modulation multiporteuses du type OFDM.

12. Dispositif d'émission/réception d'un réseau local sans fil, **caractérisé par le fait qu'**il incorpore un composant selon l'une des revendications 1 à 11.

FIG.1

EP 1 507 334 A1

FIG.2

# FIG.3

BNR

MCOR

DM

CTL

# FIG.5

BNE

I

Fs

MOD

k

cos Fi

sin Fi

+

+

-

vers CNA

Q

k

Fs

FIG.6

# FIG.7

EP 1 507 334 A1

## FIG.8

MSIN → CNA → FBAW → CAN → [ MP → MDT ]

## FIG.4

## FIG.9

FIG.10

**Office européen des brevets**

**RAPPORT DE RECHERCHE EUROPEENNE**

Numéro de la demande

EP 04 29 1714

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 597 653 A (NOKIA MOBILE PHONES LTD) 18 mai 1994 (1994-05-18) | 1,12 | H04B1/54 H04B1/40 |
| Y | * colonne 2, ligne 16 - colonne 3, ligne 13; figure 1 * | 2-11 | |
| Y | EP 0 678 974 A (NOKIA MOBILE PHONES LTD) 25 octobre 1995 (1995-10-25) * page 4, ligne 41 - page 6, ligne 21; figure 1 * | 2,3,11 | |
| Y | AWANG Z ET AL: "Sol-gel derived bulk acoustic wave devices for cellular communication applications" SEMICONDUCTOR ELECTRONICS, 1996. ICSE '96. PROCEEDINGS., 1996 IEEE INTERNATIONAL CONFERENCE ON PENANG, MALAYSIA 26-28 NOV. 1996, NEW YORK, NY, USA,IEEE, US, 26 novembre 1996 (1996-11-26), pages 238-243, XP010242179 ISBN: 0-7803-3388-8 * page 238, colonne 1, ligne 23 - page 241, colonne 1, ligne 36 * | 4-10 | |
| D,A | US 6 044 112 A (KOSLOV JOSHUA L) 28 mars 2000 (2000-03-28) * abrégé * | 1 | **DOMAINES TECHNIQUES RECHERCHES (Int.Cl.7)** H04B |

Le présent rapport a été établi pour toutes les revendications

| Lieu de la recherche | Date d'achèvement de la recherche | Examinateur |
|---|---|---|
| Munich | 16 novembre 2004 | Ratajski, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**          EP 04 29 1714

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-11-2004

| Document brevet cité au rapport de recherche | | Date de publication | Membre(s) de la famille de brevet(s) | | Date de publication |
|---|---|---|---|---|---|
| EP 0597653 | A | 18-05-1994 | GB | 2272605 A | 18-05-1994 |
| | | | DE | 69331653 D1 | 11-04-2002 |
| | | | DE | 69331653 T2 | 31-10-2002 |
| | | | EP | 0597653 A2 | 18-05-1994 |
| | | | US | 5701594 A | 23-12-1997 |
| EP 0678974 | A | 25-10-1995 | FI | 941862 A | 22-10-1995 |
| | | | EP | 0678974 A2 | 25-10-1995 |
| US 6044112 | A | 28-03-2000 | JP | 11088456 A | 30-03-1999 |

EPO FORM P0460

Pour tout renseignement concernant cette annexe : voir Journal Officiel de l'Office européen des brevets, No.12/82